# EUROPEAN PATENT APPLICATION

(11) **EP 1 531 612 A2**
(43) Date of publication of application: **18.05.2005**
(21) Application number: 04026590.2
(22) Date of filing: 09.11.2004
(51) Int. Cl.: H04N 1/21

(54) **Image reproduction apparatus and image capturing apparatus**

(30) Priority: 12.11.2003 JP 2003382870
(71) Applicant: Fujinon Corporation, Saitama-shi Saitama 331-9624 (JP)
(72) Inventor: Mihara, Yoshikazu, Saitama-shi Saitama 331-9624 (JP); Yoshida, Hideo, Saitama-shi Saitama 331-9624 (JP)
(74) Representative: Klunker . Schmitt-Nilson . Hirsch

(57) **Abstract**

An image reproduction apparatus prevents a user from doubting a fault of his or her digital camera, and an image capturing apparatus having the function of the image reproduction apparatus can be realized. When an original image cannot be reproduced based on the original image data taken by a high-resolution digital camera, the display area of the thumbnail image indicating an image which cannot be reproduced is set as non-display area (indicated by diagonal lines) by clearly indicating the same. Thus, the non-display portion is not selected, and unclear original image is not displayed. As a result, user can be prevented from doubting a fault of his or her image reproduction apparatus.

## Description

### BACKGROUND OF THE INVENTION

### Field of the Invention

The present invention relates to an image reproduction apparatus, which is loaded with a removable portable memory storing both original image data indicating an original image and thumbnail image data indicating a thumbnail image of the original image, and displays on the display screen the original image and the thumbnail image based on the original image data and the thumbnail image data stored in the portable memory, and to an image capturing apparatus having the function of the image reproduction apparatus.

### Description of the Related Art

Conventionally, some digital cameras provided with a display screen have the functions of an image reproduction apparatus. Using the function of the image reproduction apparatus, a removable portable memory can be attached to a digital camera to display an image stored in the attached portable memory on the display screen.

With an increasing number of high-resolution image pickup devices, digital cameras having much higher resolution than the conventional digital cameras have been on sale at a more reasonable price. As a result, a larger number of users have requested to purchase digital cameras of high-resolution in addition to the conventional digital cameras. Thus, some users carry two digital cameras around so that they can take more professional pictures using the high-resolution cameras while they can take snaps using the low-resolution digital cameras. In this case, an original image taken by these cameras can be commonly stored on a memory card.

Thus, when the image data taken by two digital cameras having different resolutions is commonly stored in one portable memory unit, it is possible that the image taken by a high-resolution digital camera can be reproduced by a low-resolution digital camera.

Described below is the display screen displayed when a digital camera having a reproduction mode reproduces an image.

Some digital cameras having a reproduction mode display on the display screen an index image with arranged thumbnail images of the original images stored in portable memory.

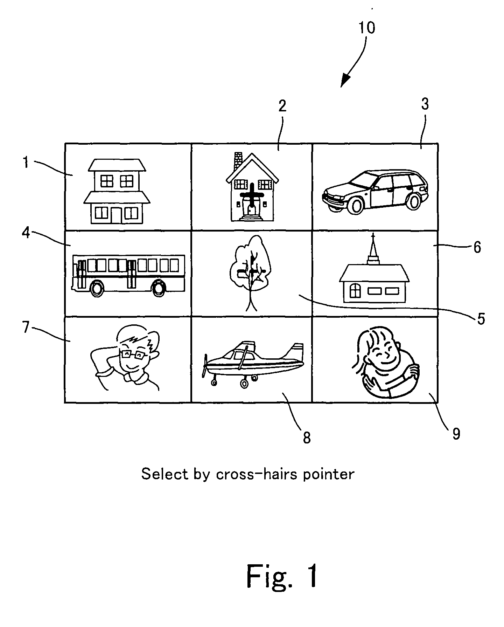

Fig. 1 shows an example of an index image displayed on the display screen by switching the mode into a reproduction mode.

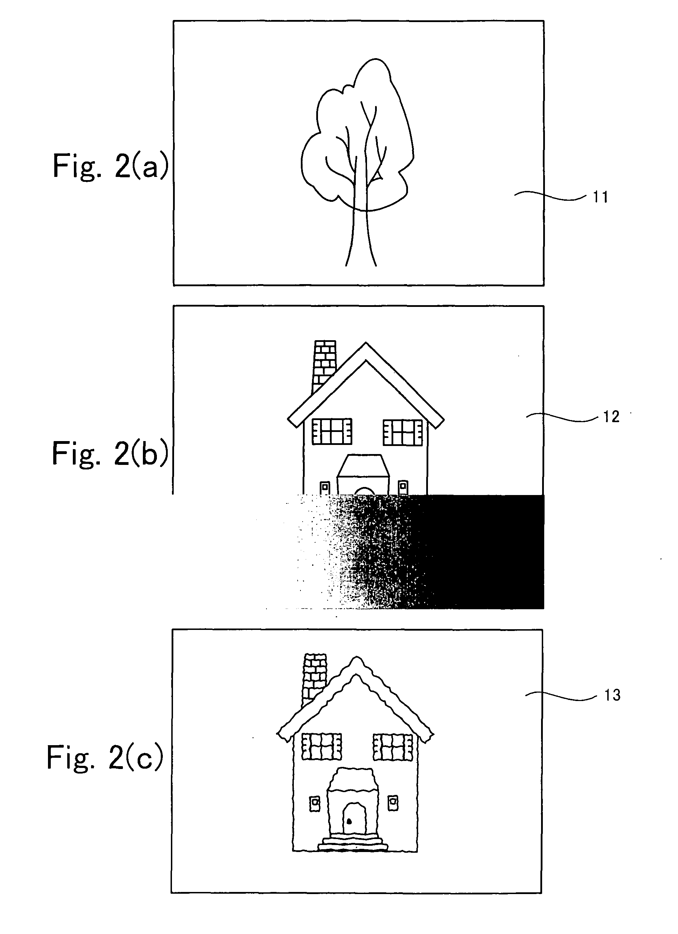

Some thumbnail images 1 to 9 forming an index image 10 shown in Fig. 1 include two types of images, that is, thumbnail images of the original images taken at a resolution equal to or lower than the resolution of a digital camera reproducing and displaying and thumbnail images of the original images taken at a resolution higher than the resolution of the digital camera. Thus, regardless of the resolution of original images, thumbnail images 1 to 9 are displayed on the display screen as the index image 10, and if any thumbnail image, for example, the thumbnail image specified by the reference numeral 5 is selected from the index image, an original image 11 (see Fig. 2(a)) corresponding to the designated thumbnail image is displayed.

Fig. 2 (a) shows an example of the case in which when the thumbnail image (the original image is in low resolution) specified by the reference numeral 5 shown in Fig. 1 is designated, the original image 11 corresponding to the specified thumbnail image is displayed on the display screen.

Fig. 2 (b) shows an example of the case in which when the thumbnail image (the original image is in high resolution) specified by the reference numeral 2 shown in Fig. 1 is designated, an original image 12 corresponding to the specified thumbnail image is displayed on the display screen.

As shown in Fig. 2 (a) , when a thumbnail image (specified by the reference numeral 5) corresponding to the original image at low-resolution taken by a digital camera equal to or lower than the resolution of the displaying digital camera is designated, the image can be displayed without problem. However, as shown in Fig. 2(b), an original image taken at a higher resolution than the reproducing and displaying digital camera is to be reproduced, the image size of the original image exceeds a predetermined image size which is the process size in the digital camera, thereby failing in correctly displaying the image. In this case, a user might doubt the fault of the camera.

Thus, to prevent a user from having such doubt, thumbnail images can be enlarged and displayed based on the assumption that the displayed images are not printed as is.

Fig. 2(c) shows an example of displaying an enlarged image 13 of a thumbnail image forming part of the index image shown in Fig. 1 in a predetermined operation.

The technique of enlarging and displaying a thumbnail image is disclosed by Japanese Patent Publication No. 3177483, but the document indicates enlarging and displaying a thumbnail image to shorten the reproduction time in the continuous reproduction mode. Therefore, if the thumbnail image 13 is enlarged and displayed as shown by Fig. 2(c) in the normal image display, a coarse image comes out. Then, the original image that was taken at high resolution becomes a coarse image, and the user doubts a fault of his or her digital camera.

### SUMMARY OF THE INVENTION

The present invention has been made in view of the above circumstances and provides an image reproduction apparatus capable of preventing a user from doubting a fault of his or her digital camera, and an image capturing apparatus having the function of the image reproduction apparatus.

An image reproduction apparatus according to the present invention is loaded with a removable portable memory storing both original image data indicating an original image and thumbnail image data indicating a thumbnail image of the original image, and displays on the display screen the original image and the thumbnail images based on the original image data and the thumbnail image data stored in the portable memory, and includes:
a display control section which displays an index image of arranged thumbnail images on the display screen in an operation, and displays an original image corresponding to a thumbnail image designated in an operation in the displayed index image.

With the configuration, the display control section includes determination means which determines whether or not each original image corresponding to any of the thumbnail images forming an index image is image data within a predetermined image size, and displays an index image indicating by the determination means that an original image cannot be displayed in a display area of the thumbnail image corresponding to the original image having an image size exceeding the predetermined image size.

According to the image reproduction apparatus of the present invention, when the determination means determines that an original image has an image size exceeding the predetermined image size, it is indicated in a display area of each thumbnail image that the original image cannot be displayed. Then, an operation of reproducing an original image by operating the thumbnail image for which it is indicated that the original image cannot be displayed is not carried out. As a result, the original image as shown by Fig. 2 (b) is not reproduced, thereby eliminating the doubt of the user about a fault of the image reproduction apparatus.

When an index image is displayed, the display control section may display an index image indicating that an original image cannot be displayed instead of displaying a thumbnail image corresponding to an original image having an image size exceeding a predetermined image size according to the determination means, or may display an index image indicating that an original image cannot be displayed as well as displaying a thumbnail image corresponding to an original image having an image size exceeding a predetermined image size according to the determination means.

An image capturing apparatus according to the present invention is loaded with removable portable memory, and has a photography mode in which a subject is captured based on which original image data indicating an original image which is a captured image of the subject and thumbnail image data indicating a thumbnail image of the original image are recorded, and a reproduction mode in which the original image and the thumbnail image based on the original image data and the thumbnail image data recorded on the portable memory are displayed on the display screen, and includes:
a display control section which displays an index image of arranged thumbnail images on the display screen in an operation, and displays an original image corresponding to a thumbnail image designated in an operation in the displayed index image.

With the configuration, the display control section includes determination means which determines whether or not each original image corresponding to any of the thumbnail images forming an index image is image data within a predetermined image size, and displays an index image indicating by the determination means that an original image cannot be displayed in a display area of the thumbnail image corresponding to the original image having an image size exceeding a predetermined image size.

Thus, with the image capturing apparatus having the function of the image reproduction apparatus, the operation of the image reproduction apparatus can be applied to the image capturing apparatus.

As described above, an image reproduction apparatus capable of preventing a user from doubting a fault of his or her digital camera, and an image capturing apparatus having the function of the image reproduction apparatus can be realized.

### BRIEF DESCRIPTION OF THE DRAWINGS

Fig. 1 shows an index screen displayed when a digital camera is switched into a reproduction mode;
Fig. 2(a) shows an example of the case in which when a thumbnail image specified by reference numeral 5 shown in Fig. 1 is designated, the original image 11 corresponding to the designated thumbnail image is displayed on the display screen;
Fig. 2(b) shows an example of the case in which when a thumbnail image specified by reference numeral 2 shown in Fig. 1 is designated, an original image 12 is displayed on the display screen;
Fig. 2 (c) shows an example of the case in which when a thumbnail image specified by reference numeral 2 shown in Fig. 1 is designated, an enlarged image 13 of the thumbnail image is displayed on the display screen;

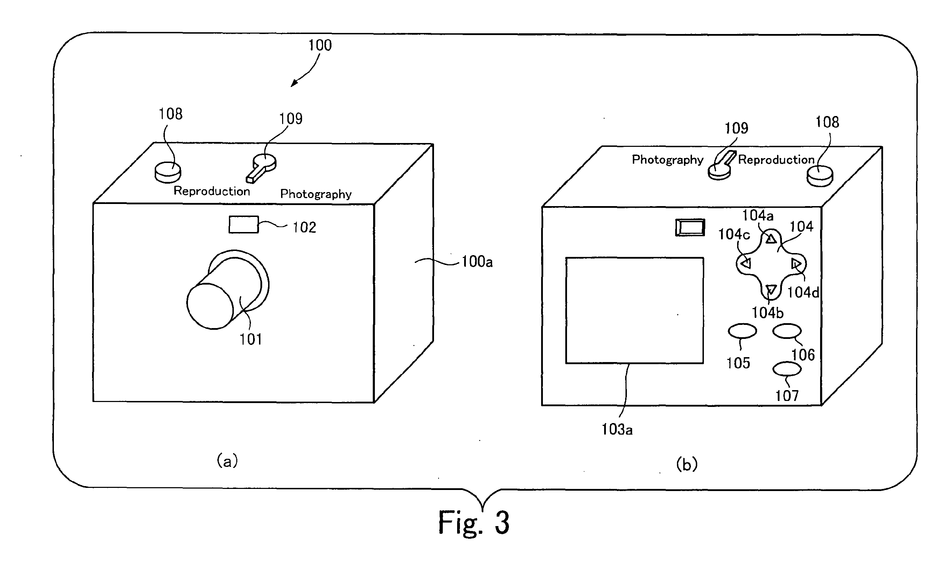

Fig. 3 is a perspective view of the configuration viewed from diagonally above the front and diagonally above the back of the appearance of the camera according to an embodiment of the present invention;

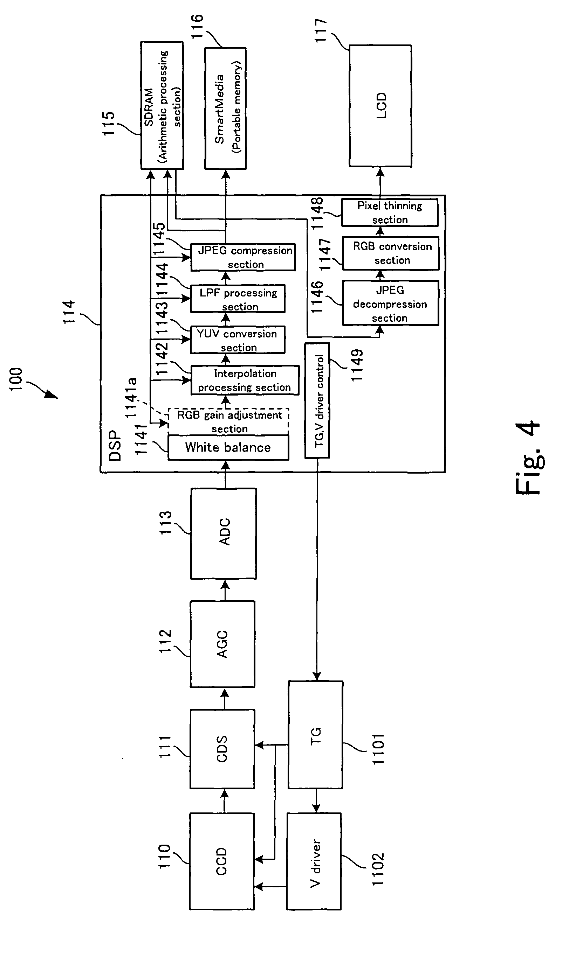

Fig. 4 is a block diagram showing the internal configuration of the digital camera shown in Fig. 3;

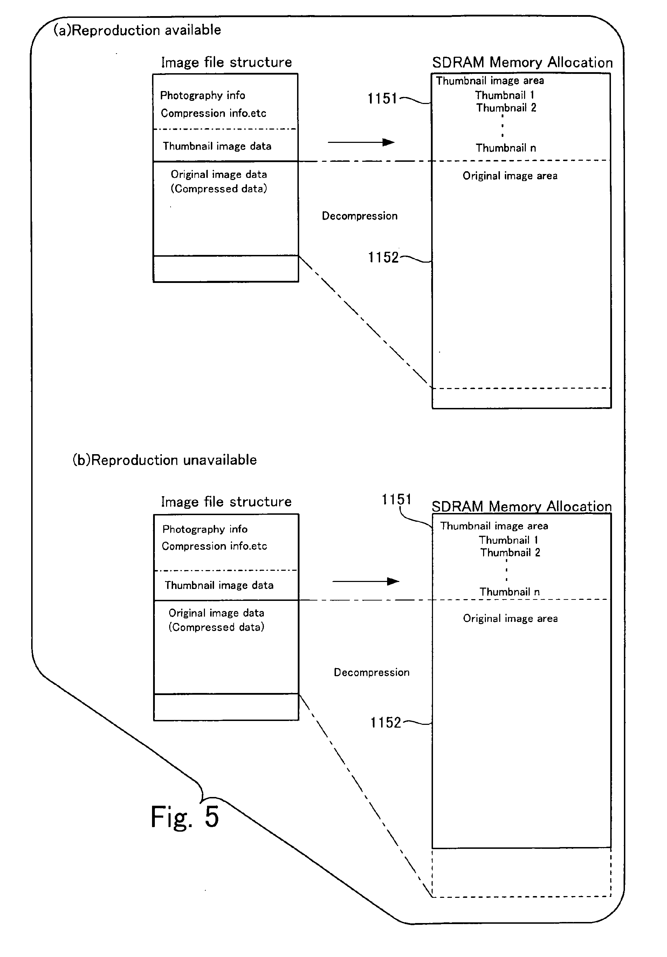

Fig. 5 shows memory allocation of SDRAM;

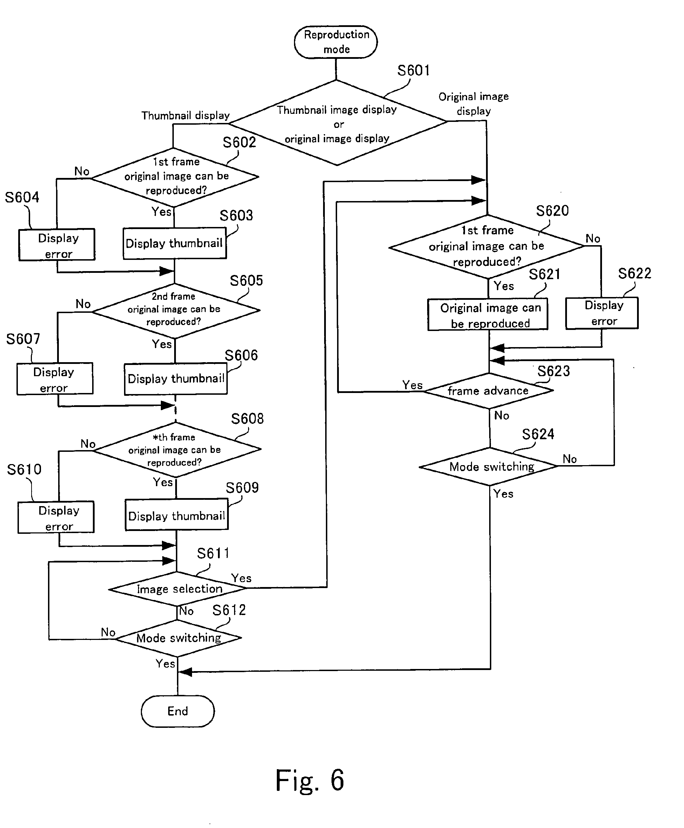

Fig. 6 is a flowchart showing the procedure used by a DSP 114 when a mode switch 109 is switched to the reproduction mode;

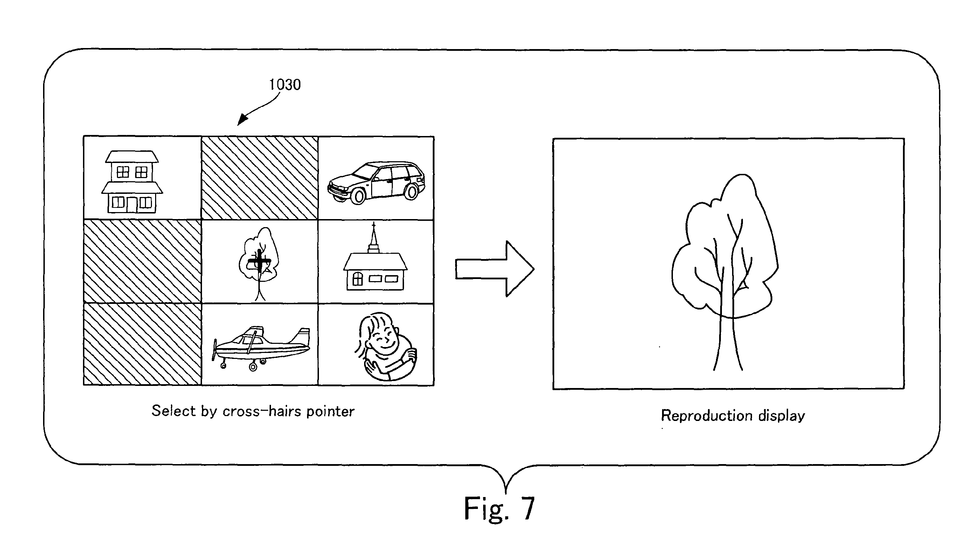

Fig. 7 shows an example of an index image indicating an error in step S604, S608, or S610 in Fig. 6;

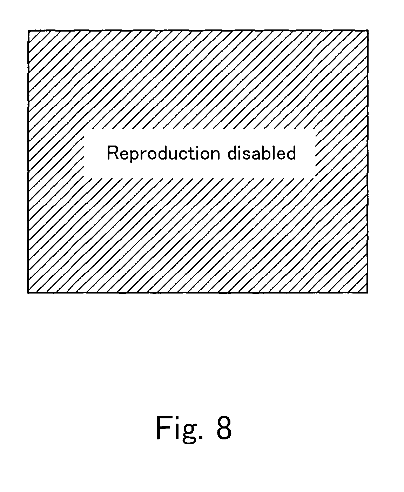

Fig. 8 shows an example of error display of step S622 shown in Fig. 6; and

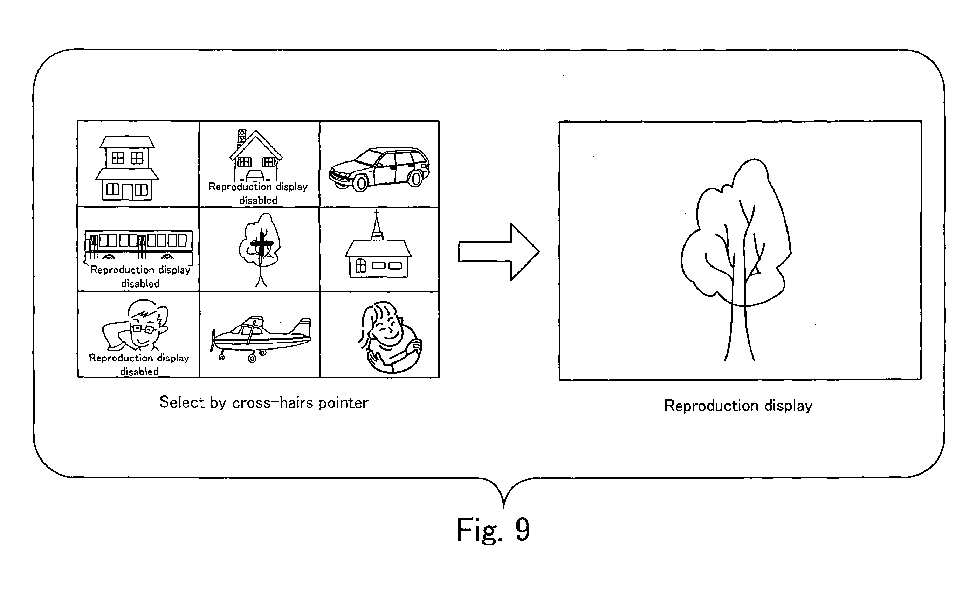

Fig. 9 shows another example of an index image indicating that the original image cannot be displayed.

### DETAILED DESCRIPTION OF THE INVENTION

The embodiments of the present invention are described below by referring to the drawings.

A digital camera is explained below as an example of an image capturing apparatus having the function of the image reproduction apparatus according to the present invention.

Part (a) in Fig. 3 is a perspective view of the configuration from diagonally above the front of a digital camera 100 as an example of the image capturing apparatus. Part (b) in Fig. 3 is a perspective view of the configuration from diagonally above the back of appearance of the digital camera 100.

The digital camera 100 is loaded with a removable portable memory (not shown in the attached drawings, and has a photography mode in which a subject is captured based on which original image data indicating an original image which is a captured image of the subject and thumbnail image data indicating a thumbnail image of the original image are recorded, and a reproduction mode in which the original image and the thumbnail images based on the original image data and the thumbnail image data recorded on the portable memory are displayed on the display screen. The switch between the reproduction mode and the photography mode is performed by a mode switch 109 shown in the part (b) of Fig. 3.

First, the configuration is briefly explained below by referring to the parts (a) and (b) of Fig. 3.

As shown in part (a) of Fig. 3, a lens barrel 101 is provided at the center of a camera body 100a. Above the lens barrel 101, an object window 102 of a finder is provided. By viewing the subject through the eyepiece of the finder on the back of the camera body, a framing operation can be performed using a subject image obtained through the object window 102, but the framing operation can also be performed using a through image displayed on the LCD panel provided on the back of the camera body instead of the finder.

As shown by part (b) of Fig. 3, a LCD panel 103a is provided as the display screen on the back of the camera body 100a. A cross key 104 which is an operation key is provided beside the LCD panel 103a, and the cross key 104 includes four keys, that is, an UP key 104a, a DOWN key 104b, an FF key 104c, and a REW key 104d. Below the cross key 104, a menu button 105 for display of a menu on the LCD panel 103a, a determination button 106 operated for designation of an option from the menu displayed on the LCD panel 103a when the menu button 105 is pressed, and a cancel button 107 operated when the designation is canceled after the designation are provided.

On the top surface of the camera body 100a, a release button 108 and a mode switch 109 are provided. When the mode switch 109 is switched to the photography mode, the subject captured by a built-in image taking lens in the lens barrel 101 is displayed as a through image on the LCD panel 103a. When an image taking operation is performed by the release button 108 with appropriate timing while watching the through image, image data is stored in the portable memory as an image file depending on the image taking operation. The image file is formed by image data and a header containing image taking information, and a thumbnail image which is a reduced image of the original image is recorded in the header.

When the mode switch 109 is switched to the reproduction mode, an image based on the image data in any image file in a number of image files stored in the portable memory is displayed on the display screen. The digital camera includes an original image display mode and a thumbnail image display mode in the menu of the reproduction mode. When the thumbnail image display mode is specified, each thumbnail image is read from a number of image files in the portable memory, and an index image (refer to Fig. 1) based on the thumbnail image data is displayed on the LCD panel 103a. When the determination button 106 is pressed after the image is specified in the operation of the cross key 104 while checking the index image, the original image corresponding to the specified image is displayed on the LCD panel 103a. When the original image display mode is specified, an original image based on the image data in any image file in a number of image files in the portable memory is displayed on the LCD panel 103a. If any mode is once set in these modes, the displaying operation is performed in the set mode.

Fig. 4 is a block diagram showing the configuration of the inside of the digital camera shown in Fig. 3.

Fig. 4 shows the portion clearly indicating the flow of image data in the photography mode and the flow of image data in the reproduction mode.

Each section shown in Fig. 4 is integrally controlled by a DSP 114. Although not shown in the attached drawings, the DSP 114 has non-volatile memory storing a program. Each section is controlled based on the program in the non-volatile memory. An operation signal from switches shown by parts (a) and (b) of Fig. 3 is also supplied to the DSP 114, and a process is performed depending on each operation signal. When the menu button 105 shown in the part (b) of Fig. 3 is operated, the menu screen having options such as the thumbnail image display mode, the original image display mode, etc. is also displayed. As described above, when the thumbnail image display mode is selected after any key is operated in the cross key 104 and then the determination button is pressed, an index image formed by thumbnail images is displayed on the LCD panel 103a, whereas when the original image display mode is selected and the determination button is pressed, the original image is displayed on the LCD panel 103a.

Before explaining the process performed in the reproduction mode, the image taking process performed when the mode switch 109 of the digital camera is switched to the photography mode is briefly explained below.

The image data indicating a subject image is generated by an image pickup device (in this example, since a CCD solid-state image pickup device is used, it is hereinafter referred to as a CCD) 110 and output to a CDS 111 at the later stage. In this CCD 110, a number of photo receiving elements are arranged in a two dimensional array in the CCD 110. By accumulating charge in each photo receiving element, a subject image is generated. The timing of the accumulation of the charge is adjusted by a timing generator (hereinafter referred to as a TG) 1101 and the DSP 114. Upon the releasing operation, the following are carried out. At an instruction from the TG.V driver control section 1149 of the DSP 114, an accumulation start timing signal is supplied from the timing generator 1101 to the CCD 110, and the CCD 110 starts accumulating the charge in synchronization with that timing signal. And at an instruction from the TG.V driver control section 1149, a charge sweeping timing signal is supplied from the timing generator 1101 to the CCD 110 through the V driver 1102 and the charge accumulated in each photo receiving element is sequentially output to the CDS 111 in synchronization with that timing signal. The time determined by the accumulation start timing and the charge sweeping timing corresponds to the shutter speed. When a through image is generated, the DSP 114 controls the TG 1101, supplies a timing signal from the TG 1101 to the CCD 110 every 33 ms, for example, and the image data thinned in the CCD is output to the CDS 111 every 33 ms, and the image data output every 33 ms is supplied to an LCD 117, thereby displaying the image based on the image data as a through image.

The noise of the correlated double sampling (CDS) 111 is reduced on the image data, and an auto gain control (AGC) 112 adjusts the amplitude, and the level of the signal output from the AGC 112 is adjusted.

Thus, the level-adjusted RGB signal is supplied to the DSP 114 through A/D converter (hereinafter referred to as an ADC) 113. In the DSP 114, when the image processing is performed in each section in the DSP 114, all pixel data generated in the CCD 110 is stored in SDRAM 115, and then pixel data is read from the SDRAM 115, thereby performing a process in each section on the pixel data.

The DSP 114 includes a white balance adjustment section 1141 for performing image processing, an interpolating process section 1142, a YUV conversion section 1143, an LPF processing section 1144, and a JPEG compression section 1145. In these processing units, an image process is performed on the image data read from the SDRAM 115.

The function of each section in the DSP 114 is explained below.

The white balance adjustment section 1141 is provided with an RGB gain adjustment section 1141a, and the RGB gain adjustment section 1141a adjusts the amplitude of each of the R, G, and B signals such that white color (that is, white) indicating high purity is obtained when the R, G, and B signals are mixed together.

Then, each of the white-balance-adjusted R, G, and B signals is supplied to the interpolating processing section 1142, an interpolating process is performed by the interpolating processing section 1142 such that the signals of adjacent pixels can be smoothed, and the signals are supplied to the YUV conversion section 1143. The YUV conversion section 1143 converts the R, G, and B signals into a brightness signal Y and color different signals U and V, and the high frequency wave components are removed by the LPF processing section 1144 at the later stage, and the resultant signals are supplied to the JPEG compression section 1145. The JPEG compression section 1145 compresses the image data, and the compressed image data is recorded as an image file together with the header in the portable memory 116. The thumbnail image data indicating the thumbnail images is recorded in the header.

Thus, the processing of image data is performed in the photography mode, and image data is recorded as the image file in the portable memory 116.

The flow of image data in the reproduction mode is explained below.

When the mode switch 109 is switched to the reproduction mode, an image file is read from the portable memory 116, and the header section and the image data of the image file are temporarily stored in the SDRAM 115. The image data stored in the SDRAM 115 is read to the DSP 114, and decompressed by a JPEG decompression section 1146 according to the compression information in the header section, the decompressed image data is converted to an RGB signal by an RGB conversion section 1147, and is supplied to an LCD 117 after the pixels are thinned for resolution suitable for the display screen by a pixel thinning section 1148. In this example, the SDRAM 115 is used not only as buffer memory for arithmetic operations but also as buffer memory for display, and the image data is decompressed by the JPEG decompression section 1146 and then stored in the SDRAM 115.

The original image based on the original image data stored in the SDRAM 115 is displayed on the display screen. The SDRAM 115 also stores thumbnail image data in the header of the image file for display of an index image.

Fig. 5 shows memory allocation of the SDRAM 115.

Fig. 5 shows an original image area 1152 which stores original image data decompressed by the 1146, and a thumbnail image area 1151 which stores thumbnail images in the header section of a number of image files in the memory card.

If image data is taken by the digital camera in this case or other digital cameras having the same resolution, it is stored in the original image area 1152 of the SDRAM 115 without any problem as shown by the part (a) of Fig. 5, and an image is normally displayed. On the other hand, when image data taken by a digital camera of a high resolution is reproduced with the digital camera switched to the reproduction mode, there is no problem with thumbnail images, but the high resolution causes exceeding image size over a predetermined image size, and thus the data cannot be completely stored in the original image area 1152. Therefore, when the image is reproduced and displayed based on the image data, the image as shown by Fig. 2(b) is obtained.

Therefore, when thumbnail images is read from the portable memory 116, the size of the original image data corresponding to the thumbnail images is calculated from the leading and trailing addresses at which the image data is stored, and when the calculated size of the original image data exceeds a predetermined size, in this example, the storage size of the original image area, a process of suppressing the display of the thumbnail images is performed by the DSP 114. The DSP 114 corresponds to the display control means according to the present invention.

The DSP 114 corresponding to the display control section includes determination means which determines whether or not each original image corresponding to each of the thumbnail images forming an index image corresponds to the image data within a predetermined image size, and displays an index image in which an original image cannot be displayed in the display area of the thumbnail images corresponding to the original image having an image size exceeding the predetermined image size by the determination means.

Fig. 6 is a flowchart of the procedure used by the DSP 114 which is a display control section when the mode switch 109 is switched to the reproduction mode.

It is determined in step S601 which is selected, the thumbnail image display mode or the original image display mode. If it is determined in step S601 that the thumbnail images are to be displayed, control is passed to step S602 and it is determined whether or not the original images corresponding to the thumbnail images forming the index image can be reproduced. In step S602, it is determined whether or not the original image data corresponding to the thumbnail image in the first frame in the thumbnail images has the image size exceeding a predetermined image size to determine whether or not reproduction is possible. It the reproduction is possible, then control is passed to YES, and a thumbnail image is displayed in step S603. If it is determined in step S602 that reproduction is impossible, then control is passed to NO, that is, to S604, and an error displaying process is performed. As the error displaying process, in this example, there is performed a process of displaying an index image indicating the original image being unavailable instead of showing the thumbnail image in the first frame.

In steps S605 to S607, the second frame is processed. Subsequently, the processes are similarly performed on the third and fourth frames, and up to the last frame in steps S608 to S610 (the frame with the symbol * in Fig. 6). The intermediate process steps are indicated by dotted lines for simple illustration, and the processes in steps S608 to S610 are represented as the processes for the last frame.

When the process on the last frame is completed after finishing the processes in step S609 or S610, control is passed to step S611.

When any thumbnail image is selected by the cross key in the index image in step S611, control is passed to YES, and it is determined in step S620 whether or not the original image can be reproduced. If it is determined in step S611 that no image is selected, then control is passed to NO, and then to step S612.

It is determined in step S612 whether or not the mode switch 109 has been switched to the photography mode. If it is determined in step S612 that the switch to the photography mode is performed, then the process of the flow terminates. If it is determined that the reproduction mode continues, control is passed to NO, and it is determined back in step S611 whether or not a thumbnail image has been selected in the index image.

Now, the procedures in step S611 in which control is passed to YES, and in which the original image display mode is selected and control is passed to step S620 are described below.

When it is determined in step S601 that the original image display mode is selected, control is passed to the original image display process, and to step S620. If it is determined in step S611 that an image has been selected and to YES, control is also passed to step S620.

It is determined in step S620 whether or not the original image data can be reproduced. If it is determined that the data can be reproduced, control is passed to YES, and the original image is displayed in step S621. If it is determined in step S620 that the data cannot be reproduced, then error display is performed. Any process on step S621 or S622 is completed, control is passed to step S623, and it is determined whether or not frame advance is to be carried out.

If it is determined in step S623 that the cross key is operated and frame advance is ordered, then control is returned to step S620, and it is determined whether or not the original image corresponding to the thumbnail images in the next frame can be reproduced. After repeating the similar process, if it is determined that the cross key 104 is not operated and no frame is to be advanced, control is passed to NO, and it is determined in step S624 whether or not the cross key 104 has been switched. If it is determined in step S624 that the reproduction mode continues, then control is returned to step S623, and it is determined in step S623 whether or not frame advance is to be carried out. If it is determined that switch to reproduction mode is performed, then the process in the flowchart terminates.

The determination steps S604, S607, and S610 shown in Fig. 6 correspond to the determination means according to the present invention.

Fig. 7 shows an example of the index image displayed when the thumbnail image display mode is selected.

Fig. 7 shows an example of displaying an index image that includes hidden thumbnail original images (shaded in Fig. 7) as their original images cannot be reproduced and displayed. This is an example of displaying an error in step S604, S607, or S610 in Fig. 6.

As shown in Fig. 7, when an index image 1030 is displayed indicating that some original images cannot be reproduced and displayed, i.e. including hidden thumbnail original images, the thumbnail images corresponding to these original images cannot be selected from the index image 1030 by the operation.

Fig. 8 shows an example of an error display in step S622.

When the original image display mode is selected, a thumbnail frame of an original image unavailable for reproduction may be selected for reproduction. In this case, however, as shown in Fig. 8, only the characters saying "reproduction disabled" are displayed to give the information that the image data cannot be reproduced to the user. The diagonal lines shown in Fig. 8 are used to show the image cannot be displayed.

Accordingly, it is possible to avoid displaying an unclear original image that is unavailable for reproduction display.

Fig. 9 shows an example of an index image including some thumbnail images accompanied by the characters saying that the original image cannot be reproduced and displayed, which is another example of error displays in step S604, S607, and S610. As shown in Fig. 9, there is displayed an index image including the thumbnail images together with the characters saying "reproduction display disabled", however, these thumbnail images are not available for reproduction display. The addition of the characters is also performed by the DSP 114 which is a display control section.

Thus, excess operations are not performed, and the original image of high resolution is not displayed, thereby preventing a user from doubting a fault of the digital camera.

In the embodiments of the present invention, a digital camera having a reproduction mode is explained above, but the present invention is not limited to a digital camera, but any image capturing apparatus with the reproduction function can be used with the present invention. Additionally, it is obvious that an image reproduction apparatus which has no image taking process unit and only reproduces images can also be used.

## Claims

1. An image reproduction apparatus which is loaded with a removable portable memory storing both original image data indicating an original image and thumbnail image data indicating a thumbnail image of the original image, and displays on the display screen the original image and the thumbnail image based on the original image data and the thumbnail image data stored in the portable memory, comprising:
a display control section which displays an index image of arranged thumbnail images on the display screen in an operation, and displays an original image corresponding to a thumbnail image designated in an operation in the displayed index image, wherein
the display control section includes determination means which determines whether or not each original image corresponding to any of the thumbnail images forming an index image is image data within a predetermined image size, and displays an index image indicating by the determination means that an original image cannot be displayed in a display area of the thumbnail image corresponding to the original image having an image size exceeding the predetermined image size.

2. The image reproduction apparatus according to claim 1, wherein
when an index image is displayed, the display control section displays an index image indicating that an original image cannot be displayed instead of displaying a thumbnail image corresponding to an original image having an image size exceeding a predetermined image size according to the determination means.

3. The image reproduction apparatus according to claim 1, wherein
when an index image is displayed, the display control section displays an index image indicating that an original image cannot be displayed as well as displaying a thumbnail image corresponding to an original image having an image size exceeding a predetermined image size according to the determination means.

4. An image capturing apparatus which is loaded with removable portable memory, and has a photography mode in which a subject is captured based on which original image data indicating an original image which is a captured image of the subject and thumbnail image data indicating a thumbnail image of the original image are recorded, and a reproduction mode in which the original image and the thumbnail image based on the original image data and the thumbnail image data recorded on the portable memory are displayed on the display screen, comprising:
a display control section which displays an index image of arranged thumbnail images on the display screen in an operation, and displays an original image corresponding to a thumbnail image designated in an operation in the displayed index image, wherein
the display control section includes determination means which determines whether or not each original image corresponding to any of the thumbnail images forming an index image is image data within a predetermined image size, and displays an index image indicating by the determination means that an original image cannot be displayed in a display area of the thumbnail image corresponding to the original image having an image size exceeding a predetermined image size.
